# EUROPEAN PATENT APPLICATION

(11) **EP 4 699 429 A1**
(43) Date of publication of application: **25.02.2026**
(21) Application number: 25196887.1
(22) Date of filing: 20.08.2025
(51) Int. Cl.: A01D 33/02, A01D 33/08, A01D 57/20, A23N 12/00, A01D 17/00

(54) **A CLEANING SYSTEM FOR CLEANING HARVESTED AGRICULTURAL PRODUCTS**

(30) Priority: 20.08.2024 BE 202405542
(71) Applicant: AVR NV, 8800 Roeselare (BE)
(72) Inventor: PAESSCHESOONE, Steven, 8840 Staden (BE); DECANCQ, Janick, 8770 Ingelmunster (BE); BOUDRY, Ward, 8980 Beselare (BE)
(74) Representative: De Clercq & Partners

(57) **Abstract**

A cleaning system (1) for cleaning a flow of harvested agricultural products is described. A haulm roller (40) is arranged in a movable way at a downstream end (12) of the first transport device (10). An upstream end (22) of the second transport device (20) is arranged in a movable way and is configured in such a way that, when moving the haulm roller (40), a change of the distance (D) between the haulm roller (40) and the upstream end (22) of the second transport device (20) is limited.

## Description

### Technical domain

The technical domain concerns a cleaning system for cleaning harvested agricultural products. Such cleaning systems are used, for example, in agricultural machinery, agricultural vehicles, processing installations, etc. for harvested agricultural products. Such harvested products include, for example, vegetable products such as tubers, bulbs and/or root crops, such as potatoes, onions, carrots, sugar beet, fodder beet, etc.

### State of the art

Cleaning systems for removing haulm from the flow of harvested agricultural products, such as harvested potatoes, are described for example in EP0554232A1. A well-known system involves the use of a haulm roller that works together with a transport device to remove haulm from the flow of harvested agricultural products. As is known, this haulm roller is thereby positioned at a downstream end of the transport device, near a drop stage between this transport device and a next transport device. The positioning of this haulm roller requires a relatively large drop stage that provides sufficient space for the haulm roller, especially when the haulm roller is arranged in a movable way in order to vary the distance to the flow of the harvested agricultural products. The increased flexibility of a movable haulm roller thus leads to an increased risk of damage to the harvested agricultural products.

There is a clear need for a system that can clean the harvested agricultural products in a reliable and efficient manner, as well as remove the haulm, and reduce the risk of damage to the harvested agricultural products during the cleaning operation.

### Summary

According to a first aspect, a cleaning system is provided for cleaning a flow of harvested agricultural products comprising:
- a first transport device;
- a second transport device;
- a drop stage between the first transport device and the second transport device;
- a haulm roller configured for working together with the first transport device for removing haulm from the flow of harvested agricultural products, the haulm roller being arranged in a movable way at a downstream end of the first transport device,
CHARACTERIZED IN THAT
an upstream end of the second transport device is arranged in a movable way and is configured in such a way that, when moving the haulm roller, a change in the distance between the haulm roller and the upstream end of the second transport device is limited.

The movable haulm roller allows reliable and efficient haulm removal, reducing the risk of damage to the harvested agricultural products during the cleaning operation by limiting any change in the distance between the haulm roller and the upstream end when moving the haulm roller.

According to an embodiment, a cleaning system is provided, wherein:
- the haulm roller is movable over a movement range between a state in which the haulm roller is closest to the flow of harvested agricultural products and a state in which the haulm roller is furthest from the flow of harvested agricultural products; and
- a distance between the upstream end of the second transport device and the downstream end of the first transport device over at least a portion of the movement range of the haulm roller is less than or equal to
   - 150% of the diameter of the haulm roller;
   - 120% of the diameter of the haulm roller;
   - 100% of the diameter of the haulm roller;
   - 90% of the diameter of the haulm roller; or
   - 80% of the diameter of the haulm roller.

It will be clear that this arrangement can limit the distance between the first transport device and the second transport device at the height of the drop stage, while still allowing the use of a movable haulm roller. This allows for reliable, efficient and flexible removal of the haulm, while also reducing the risk of damage to the harvested agricultural goods as the drop stage can be kept smaller.

According to an embodiment, a cleaning system is provided, wherein the cleaning system further comprises a movement mechanism configured to also cause a displacement of the upstream end of the second transport device when the haulm roller is displaced.

This allows the displacement of the haulm roller and the upstream end to be realized.

According to an embodiment, a cleaning system is provided, wherein the movement mechanism comprises:
- a movable first frame to which the haulm roller is attached and configured for moving the haulm roller relative to the downstream end of the first transport device;
- a movable second frame to which the upstream end of the second transport device is attached and configured for moving the upstream end of the second transport device; and
wherein the movement mechanism is configured such that a displacement of the first frame causes a displacement of the second frame at least over a portion of its movement range.

This allows the haulm roller and the upstream end to be easily arranged in a movable way within the cleaning system.

According to an embodiment, a cleaning system is provided, wherein the movement mechanism comprises one or more of the following elements:
- a linkage system coupled between the movable first frame and the movable second frame and configured to also cause a displacement of the upstream end of the second transport device when moving the haulm roller and/or vice versa; and/or
- a first actuator coupled to the first frame, a second actuator coupled to the second frame, and a controller configured to control the first actuator and the second actuator such that a displacement of the first frame at least over a portion of its movement range is accompanied by a displacement of the second frame.

In this way, the linked movement of the haulm roller and the upstream end of the second transport device can be easily realized.

According to an embodiment, a cleaning system is provided, wherein the haulm roller is additionally movable under the influence of the quantity of material being discharged between the haulm roller and the first transport device, wherein this additional movement of the haulm roller is configured such that an additional movement that increases the distance between the haulm roller and the first transport device includes a movement component that allows the distance between the upstream end of the second transport device and the haulm roller:
- to be reduced by not more than 10%;
- to be reduced by not more than 5%;
- to be maintained; and/or
- to be increased.

This further limits the drop height, as any deviation of the haulm roller, for example to allow a clod or large quantity of haulm to pass through, is prevented or minimized towards the second transport device.

According to an embodiment, a cleaning system is provided, wherein the cleaning system further comprises an additional movement mechanism configured, when an additional movement of the haulm roller increases the distance between the haulm roller and the first transport device, to cause an additional movement of the haulm roller that includes a movement component that allows the distance between the upstream end of the second transport device and the haulm roller:
- to be reduced by not more than 10%;
- to be reduced by not more than 5%;
- to be maintained; and/or
- to be increased.

In this way, the additional movement can be realized. Such an additional movement allows, for example, to prevent blockages or overloads when a large quantity of haulm or other material to be removed is temporarily removed from the flow of harvested agricultural products.

According to an embodiment, a cleaning system is provided, wherein the additional movement mechanism comprises a tilting mechanism mounted on the first frame, wherein the tilting point of the tilting mechanism is located on the side of the haulm roller facing away from the second transport device.

This allows to easily realize the advantageous additional movement which allows, for example, a clod or a large quantity of haulm or material to be removed to be discharged between the haulm roller and the first transport direction without the risk of blockages or excessive inhibitory effect on the flow of agricultural goods.

According to an embodiment, a cleaning system is provided, wherein the first transport device and/or the second transport device comprise and/or consist of:
- a sieving web;
- a transport belt;
- a roller transport;
- a pintle belt.

This allows the improved haulm roller to be optimally used in a variety of transport devices.

According to a second aspect, an agricultural machine is provided comprising a cleaning system according to the first aspect, wherein the agricultural machine comprises at least one said cleaning system.

Such a cleaning system can be easily integrated into an agricultural machine and/or installed as a replacement or upgrade for an existing cleaning unit.

According to an embodiment, an agricultural machine is provided, wherein the agricultural machine comprises or consists of:
- an agricultural vehicle;
- a potato harvester; and/or
- a processing device or transport device for harvested agricultural products.

According to a third aspect, a method is provided for using a cleaning system for cleaning a flow of harvested agricultural products according to the first aspect, wherein the method comprises the following steps:
- displacing the movable haulm roller at a downstream end of the first transport device; and
- moving the upstream end of the second transport device in a movable way in such a way that, when moving the haulm roller, a change in the distance between the haulm roller and the upstream end of the second transport device is limited.

According to an embodiment, a method is provided, wherein the method comprises the following steps:
- displacing the haulm roller over a movement range between a state in which the haulm roller is closest to the flow of harvested agricultural products and a state in which the haulm roller is furthest from the flow of harvested agricultural products; and
- a distance between the upstream end of the second transport device and the downstream end of the first transport device over at least a portion of the movement range of the haulm roller is less than or equal to
   - 150% of the diameter of the haulm roller;
   - 120% of the diameter of the haulm roller;
   - 100% of the diameter of the haulm roller;
   - 90% of the diameter of the haulm roller; or
   - 80% of the diameter of the haulm roller.

According to an embodiment, a method is provided, wherein the method comprises the following steps:
- additionally moving the haulm roller under the influence of the quantity of material being discharged between the haulm roller and the first transport device, in such way that when this additional movement of the haulm roller increases the distance between the haulm roller and the first transport device, the additional movement includes a movement component that allows the distance between the upstream end of the second transport device and the haulm roller:
   - to be reduced by not more than 10%;
   - to be reduced by not more than 5%;
   - to be maintained; and/or
   - to be increased.

It will be clear that numerous variants and/or combinations are possible, in particular of features of embodiments described above, in particular features similar to features of one or more embodiments of another aspect.

### Brief description of the figures

By way of example, some embodiments will be illustrated using the accompanying figures, in which:
- Figure 1 shows a schematic representation of an embodiment of a cleaning system in a first state;
- Figure 2 schematically shows the embodiment of Figure 1 in a second state;
- Figure 3 and Figure 4 show an embodiment similar to the embodiment shown in Figure 1 and Figure 2 in a similar state;
- Figure 5 schematically shows an embodiment similar to Figure 1 in the first state;
- Figure 6 shows the embodiment of Figure 5 in a third state; and
- Figure 7 and Figure 8 show an embodiment similar to the embodiment shown in Figure 3 and Figure 4 in a similar state as Figure 5 and Figure 6.

### Detailed description

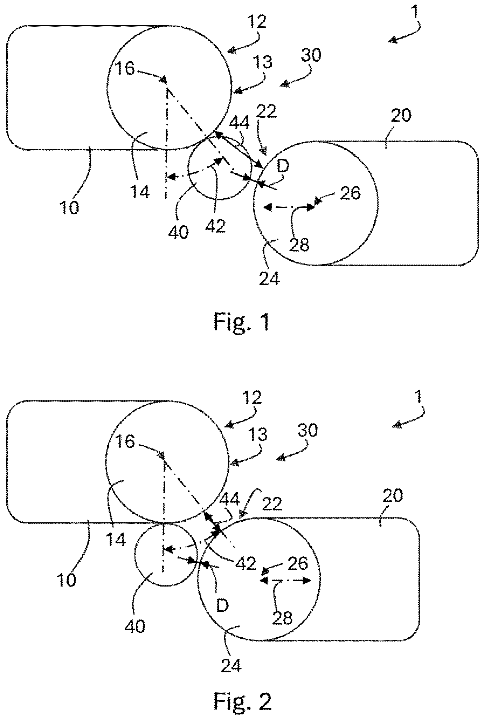

Figure 1 shows an exemplary embodiment of a cleaning system 1 for cleaning harvested agricultural products. It should be noted that the cleaning system 1 is only shown schematically. According to the embodiment shown, the cleaning system 1 can, for example, be part of an agricultural machine, such as an agricultural vehicle for harvesting potatoes. It will however be clear that alternative embodiments are possible in which it is used in any other appropriate situation for cleaning harvested agricultural products, such as for example in any appropriate agricultural machine, agricultural vehicle, processing installations, etc. for harvested agricultural products. It will be clear that the schematically represented cleaning system 1 can not only be used for cleaning potatoes, but can also, or alternatively, be used for cleaning any harvested products such as vegetable products such as tuber, bulb and/or root crops, such as potatoes, onions, carrots, sugar beet, fodder beet, etc.

As shown in Figure 1, the cleaning system 1 comprises a first transport device 10 and a second transport device 20. It will be clear that the first transport device 10 and the second transport device 20 include one or more appropriate transport elements for transporting and/or cleaning the harvested agricultural products to be cleaned. According to the embodiment shown, the first transport device 10 and the second transport device 20 comprise a sieving web. Such a sieving web can be used to clean the harvested agricultural products at least partially from unwanted materials such as soil, stones or other contaminants. It will be clear from this that the first transport device 10 moves the harvested products to the second transport device 20. In the case of an embodiment comprising a sieving web, dirt or unwanted materials are also removed.

Subsequently, the agricultural products are transferred to the second transport device 20 via a drop stage 30 between the first transport device 10 and the second transport device 20. For example, when the second transport device 20 is also designed as a sieving web, it will be clear that it also continues the cleaning process. Such a sieving web can be realized in any way known to the skilled person, such as, for example, a transport belt containing transverse metal bars spaced at regular intervals, a transport belt with appropriate openings, etc. It will be clear that alternative embodiments are possible wherein the first transport device 10 and/or the second transport device 20 comprise or consist of a transport belt, a roller transport, a pintle belt, etc. It will also be clear that, according to certain embodiments, the first transport device 10 and the second transport device 20 do not necessarily have to contain similar elements as in the exemplary embodiment shown.

As shown in Figure 1, a drop stage 30 is provided between the first transport device 10 and the second transport device 20. It will be clear that, as shown, viewed according to the direction of the flow of agricultural products, as indicated by the arrow in dotted line, the drop stage 30 is located between a downstream end 12 of the first transport device 10 and an upstream end 22 of the second transport device 20.

Such a drop stage 30 creates a difference in height between the first transport device 10 and the second transport device 20. At the drop stage, the flow of agricultural products thus falls from the higher downstream end 12 of the first transport device 10 down onto the lower second transport device 20 where the flow is transported further.

As further shown in Figure 1, the embodiment of the cleaning system 1 comprises a haulm roller 40. This haulm roller 40 works together with the first transport device 10 for removing haulm from the harvested agricultural products. As can be seen, the haulm roller 40 is therefore positioned at the level of, or in other words near, the downstream end 12 of the first transport device 10. In other words, the haulm roller 40 works together with the first transport device 10, at or near the drop stage 30. Such a haulm roller 40 is arranged in such a way that at least a portion of the haulm present in the flow of agricultural goods on the first transport device 10, at the downstream end 12 of the first transport device 10, can be grasped between the haulm roller 40 and the first transport device 10. In this way, the haulm roller 40 removes the grasped haulm through the drop stage 30. As can be seen, the haulm roller 40 is further positioned in such a way that it does not hinder and/or support the flow of the harvested agricultural products. In other words, the haulm roller 40 is preferably positioned such that desired agricultural products are not removed through the drop stage 30.

As schematically shown by arrow 42, according to the exemplary embodiment shown, the haulm roller 40 is arranged in a movable way at the downstream end 12 of the first transport device 10, or in other words at the drop stage 30. According to the exemplary embodiment shown, the haulm roller 40 can be moved in such a way that the haulm roller 40 can be positioned at a desired angular position about the central axis 16 of the reversing roller 14 of the first transport device 10. As can be seen, the haulm roller 40 is movable in an angular segment as also indicated by arrow 42, which is located in the lower half of the circumference of the reversing roller 14. This allows the haulm roller 40 to be moved closer to, or further away from the extreme point 13 of the downstream end 12 of the first transport device 10. For this purpose, for example, an appropriate displacement mechanism is provided which is configured to change the position of the haulm roller 40 relative to the first transport device 10 and, for example, to bring the haulm roller 40 into a desired position. Such an adjustment can, for example, be controlled by means of settings and/or any other appropriate input from an operator on an appropriate control panel of the cleaning system 1 which is configured by means of an appropriate controller to control an actuator of the displacement mechanism. However, it will be clear that alternative embodiments are possible wherein the haulm roller 40 is brought closer to or further away from the extreme point 13 of the downstream end 12 of the first transport device 10 in any other appropriate manner, or is arranged in a movable way at the downstream end 12 of the first transport device 10 in any other appropriate manner. For example, in addition to a movement along a circular arc or a curve, any appropriate linear movement and/or combination thereof can also be used.

It will further be clear that changing the position of the haulm roller 40 affects the operation of the haulm roller 40. The closer the haulm roller 40 is brought to the crop flow, or in other words the extreme point 13 of the downstream end 12 of the first transport device 10, the faster, or in other words, the greater the chance that the haulm roller 40 will engage with haulm or other elements to be removed in the flow of agricultural products. The further the haulm roller 40 is moved from the extreme point 13, the slower, or in other words, the lower the chance that the haulm roller 40 will engage with haulm or other element to be removed in the flow of agricultural products. It will hence be clear that such a displacement of the haulm roller 40 allows the fraction of the haulm removed from the flow, or in other words, the chance that the haulm in the flow of agricultural products is engaged by the haulm roller 40, to be adjusted, for example to a desired fraction or proportion of the haulm present in the flow of agricultural products. For example, it is not always desirable to remove all of the haulm present from the flow at once, for example because there is too much haulm in the flow to remove without overloading the haulm roller 40. It will however be clear that many other circumstances, such as harvesting conditions, weather conditions, the condition of the agricultural goods, the condition of the soil, etc. are possible wherein it is advantageous to be able to move the haulm roller relative to the downstream end 12 of the first transport device 10 in order to enable optimum operation of the haulm roller 40.

It will furthermore also be clear, for example, that when the haulm roller 40 is positioned closer to the extreme point 13 of the downstream end 12 of the first transport device 10, or in other words, closer to the flow of agricultural goods, the chance of contact between the flow of agricultural goods and the haulm roller 40 is increased, or in other words, the chance of the haulm roller 40 having an inhibitory effect on the flow of agricultural goods is increased. Conversely, it will also be clear that the inhibitory effect of the haulm roller 40 on the flow of agricultural goods is reduced as the haulm roller is positioned further from the extreme point 13 of the downstream end 12 of the first transport device 10. It will therefore be clear that this too may be a reason to move the haulm roller 40 to a position relative to the downstream end 12 of the first transport device 10 at which the desired level of any inhibitory effect on at least a portion of the flow of agricultural goods is realized.

As shown in Figure 2, which shows a state of the embodiment of Figure 1, the haulm roller has been moved to another position relative to the downstream end 12 of the first transport device 10. Figures 1 and 2 show the two extreme positions of the movement range 42 of the movable haulm roller 40 of the embodiment shown. Figure 1 shows a state in which the haulm roller 40 is positioned closest to the flow of agricultural goods and Figure 2 shows a state in which the haulm roller 40 is positioned furthest away from the flow of agricultural goods. It will however be clear that alternative embodiments are possible, wherein the movement range 42 of the movable haulm roller 40 can be any other appropriate size and/or path relative to the downstream end 12 of the first transport device 10.

As can be seen, when moving the haulm roller 40 from the position shown in Figure 1 to the position shown in Figure 2, the upstream end 22 of the second transport device 20 is also moved as indicated by arrow 28. According to the exemplary embodiment shown, arrow 28 shows how the central axis 26 of the reversing roller 24 of the second transport device 20 is moved together with the haulm roller 40 from the position shown in Figure 1 to the position shown in Figure 2, or vice versa. It will be clear that at least in the position shown in Figure 2, the distance 44 between the upstream end 22 of the second transport device 20 and the downstream end 12 of the first transport device 10 is smaller than the diameter of the haulm roller 40. **In** other words, it will be clear that, at least over a portion of the movement range 42 of the haulm roller 40, the distance 44 between the upstream end 22 of the second transport device 20 and the downstream end 12 of the first transport device 10 is smaller than the diameter of the haulm roller 40. As can be seen, according to the exemplary embodiment shown, the portion of the movement range 42 is at or near the position in which the haulm roller 42 is positioned furthest away from the flow of agricultural goods as shown in Figure 2. It will further be clear that alternative embodiments are possible, wherein the distance 42 over at least a portion of the movement range 42 of the haulm roller 40 is less than or equal to 150% of the diameter of the haulm roller 40, preferably less than or equal to 120% of the diameter of the haulm roller 40, preferably less than or equal to 100% of the diameter of the haulm roller 40, preferably less than or equal to 90% of the diameter of the haulm roller 40, for example less than or equal to 80% of the diameter of the haulm roller 40. It will be clear that this allows the size of the drop stage 30 to be limited, thereby reducing the risk of damage to agricultural goods.

It will further be clear that further alternative embodiments are possible, other than the embodiment schematically shown in Figure 1 and Figure 2. **In** this respect, it is advantageous that, as also shown in Figure 1 and Figure 2, when moving the haulm roller 40, a change in the distance D between the haulm roller 40 and the upstream end 22 of the second transport device 20 is limited. **In** other words, as can be seen, the movably arranged upstream end 22 of the second transport device 20 ensures that when moving from the state in Figure 1 to the state in Figure 2, the distance between the haulm roller 40 and the upstream end 22 would not increase as much as if the upstream end 22 were to remain stationary in the position as shown in Figure 1. In other words, when the haulm roller 40 is moved in a direction away from the flow of agricultural goods, the second transport device 20 is moved toward the haulm roller 40 and/or is moved so that the distance 44 to the first transport device 10 decreases. The movable haulm roller 40 thus allows reliable and efficient haulm removal, reducing the risk of damage to the harvested agricultural products during the cleaning operation by limiting any change in the distance D between the haulm roller 40 and the upstream end 12 of the second transport device 20 when moving the haulm roller 40.

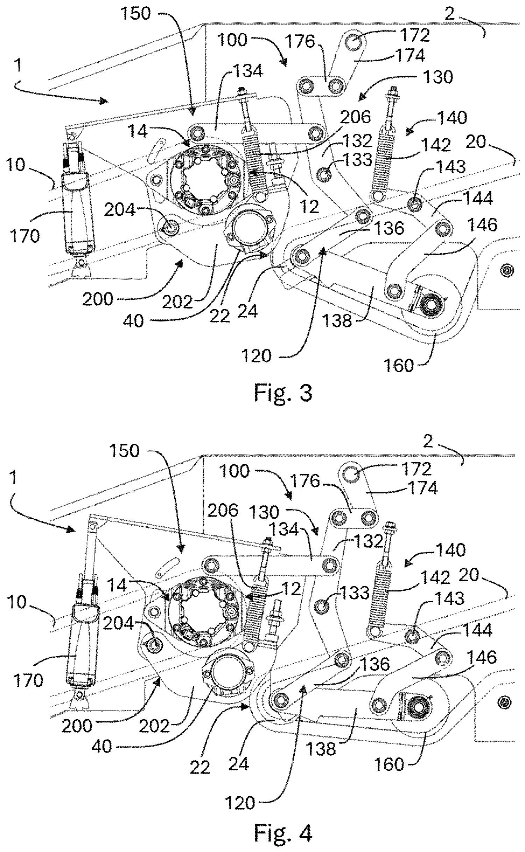

Figure 3 and Figure 4 show an embodiment similar to the embodiment shown in Figure 1 and Figure 2 in a similar state. Similar elements are indicated with similar references and are structurally and functionally similar to those described above. According to the embodiment shown, the cleaning system 1 comprises a movement mechanism 100. This movement mechanism 100 ensures a linked movement of the haulm roller 40 and the upstream end 22 of the second transport device 20. As can be seen, the movement mechanism 100 comprises a linkage system 130 coupled between a movable first frame 150 of the haulm roller 40 and a movable second frame 120 of the upstream end 22 of the second transport device. As can be seen in Figure 3 and Figure 4, this linkage system 130 also causes a displacement of the upstream end 22 of the second transport device 20 when moving the haulm roller 40, and/or vice versa.

According to the exemplary embodiment shown, the linkage system 130 comprises a first rod 132 which, as shown, is tiltable about a rotation axis 133 which is attached to the frame 2 of the cleaning system 1, or in this case the frame of an agricultural machine. The linkage system 130 further comprises a second rod 134 which couples this first rod 132 to the first frame 150 of the haulm roller 40. A third rod 136, as shown, couples the first rod 132 to the reversing roller 24 which forms the upstream end 22 of the second transport device 20. According to the exemplary embodiment shown, this third rod 136 also forms the frame 120 in which this reversing roller 24 is mounted. However, it will be clear that many alternative embodiments of such a linkage system 130 are possible which also cause a displacement of the upstream end 22 of the second transport device 20 when moving the haulm roller 40, and/or vice versa. As further shown, according to the exemplary embodiment shown, the displacement of the haulm roller 40 and the upstream end 22 of the second transport device 20 can be controlled by means of an appropriate actuator 170 which is controlled, for example, by means of an appropriate controller. The actuator shown is, for example, an appropriate linear actuator, such as an appropriate hydraulic, pneumatic, and/or electric hydraulic actuator. However, it will be clear that alternative embodiments with any other appropriate type of actuator, such as for example a rotary actuator, etc. are possible. As can be seen further, the illustrated exemplary embodiment further comprises a coupling system 172, 174, 176 which is appropriate for controlling a similar linkage system 130 on the opposite side of the cleaning system 1. In other words, according to the illustrated exemplary embodiment, the cleaning system 1 comprises a similar linkage system 130 on both sides along the longitudinal direction of the haulm roller 40. The linkage system 130 on the side shown in, for example, Figure 3 and Figure 4, or Figure 7 and Figure 8, includes an actuator 170 for controlling the positioning of the haulm roller 40 and the upstream end 22 of the second transport device 20. The opposite side, which is not shown, includes a linkage system 130 which is driven by means of the coupling system 172, 174, 176 to ensure that the haulm roller 40 and the upstream end 22 of the second transport device 20 are positioned in the same or a similar way. As can be seen, the coupling system comprises a drive rod 176 which is coupled to the linkage system on one side and drives an eccentric rod 174 on the other side for positioning a drive shaft 172 mounted in a rotatable way in the frame 2 of the cleaning system 1 and extending between both sides of the cleaning system 1. On the opposite side, a similar coupling system 172, 174, 176 then transfers to a similar linkage system 130 so that the haulm roller 40 and the upstream end of the second transport device 20 can be positioned in a similar manner on either side by means of only one actuator 170. However, it will be clear that alternative embodiments are possible, wherein, instead of such a coupling system 172, 174, 176, the opposite side also includes an actuator 170, the drive of which is suitably synchronized with the actuator 170 shown, for example by means of an appropriate controller. It will be clear that many alternative embodiments are possible to enable synchronized movement of a linkage system 130 on both sides of the cleaning system 1, by means of one or more actuators.

According to the exemplary embodiment shown, only the upstream end 12 of the second transport device 20 is displaced, and the downstream end of the second transport device 20, for example in the form of a reversing roller, remains stationary. In order to maintain sufficient tension in the sieving web, or any other appropriate transport device 20, a tension roller 160 is provided, as shown, which is attached on one side of a fourth rod 138, with the other side of the fourth rod 138 being attached in a tiltable way to the third rod 136. As can be seen, an appropriate spring system 140, for example in the form of a pneumatic actuator or any other appropriate spring system, is provided which is attached on one side to this fourth rod 138 and on the other side to the frame 2 of the cleaning system 1, or in the embodiment shown, to the frame of the agricultural machine. The illustrated embodiment of the spring system comprises, as can be seen, a mechanical tension spring 140 which is attached on one side to the frame 2 of the cleaning system 1 and on the other side, by means of a linkage system 142, 144, 146, to the fourth rod 138 with the tension roller 160. The linkage system of the spring system comprises, as shown, a tilting rod 144 which is attached to the frame 2 of the cleaning system 1 in a tiltable way around a tilting point 143. On one side of the tilting rod, the tension spring 142 is arranged and on the other side, a coupling rod 146 is arranged between the tilting rod 143 and the fourth rod 138 of the linkage system 130. It will be clear that alternative embodiments for the spring system 140 are possible, such as, for example, any other appropriate spring system comprising or consisting of a mechanical spring, such as a compression spring, coil spring, etc. or any other appropriate spring system, such as a pneumatic spring system, a hydraulic spring system, etc. It will be clear that such a tension roller 160 is arranged in such a way that it moves along with a displacement of the upstream end 22 of the second transport device 20 and, by means of the spring system 140, compensates a change in the length of the transport device 20, in this case, for example, a sieving web, in such a way that a desired tension in the second transport device 20 is maintained.

However, it will be clear that many alternative embodiments for such a movement mechanism 100 remain possible. According to an alternative exemplary embodiment, which is not shown, a first actuator can be coupled to the first frame 150 of the haulm roller. A second actuator can then be coupled to the second frame 120 of the upstream end 12 of the second transport device 20. Thereby, an appropriate controller can be coupled to the first and second actuators. This controller can then control the first actuator and the second actuator in such a way that, for example, a movement of the first frame 150 of the haulm roller 40 at least over a portion of its movement range is accompanied by a movement of the second frame 120 of the upstream end 12 of the second transport device 20.

In this way, the linked movement of the haulm roller and the upstream end of the second transport device can be easily realized.

It will however be clear that further alternative embodiments are possible wherein the cleaning system 1 comprises any appropriate movement mechanism 100 which can also cause the upstream end 22 of the second transport device 20 to be displaced when moving the haulm roller 40.

According to the embodiment shown, the movable first frame 150 to which the haulm roller 40 is attached for moving the haulm roller 40 relative to the downstream end 12 of the first transport device 10 is designed as a frame 150 which is rotatably mounted around the central axis of the reversing roller 14 of the first transport device 10. However, it will be clear that alternative embodiments are possible, wherein the movable first frame is arranged in any other appropriate manner for moving the haulm roller 40. As further shown in Figure 3 and Figure 4, the movable second frame 120 to which the upstream end 22 of the second transport device 20 is attached for moving the upstream end 22 of the second transport device 20 is designed as a rod 136 of the movement mechanism 100. However, it will be clear that alternative embodiments are possible for the movable second frame 120 for attaching the upstream end 22 of the second transport device 20 in a movable way, such as, for example, any movable attachment of the upstream end 22 of the second transport device 20 to the frame 2 of the cleaning system 1 or agricultural machine. It will be clear that many variant embodiments are possible wherein the movement mechanism 100 is configured such that a displacement of the first frame 150 causes a displacement of the second frame 120 at least over a portion of its movement range. According to further alternative embodiments, instead of only moving the upstream end 22 of the second transport device 20, the second transport device 20 can be moved in its entirety.

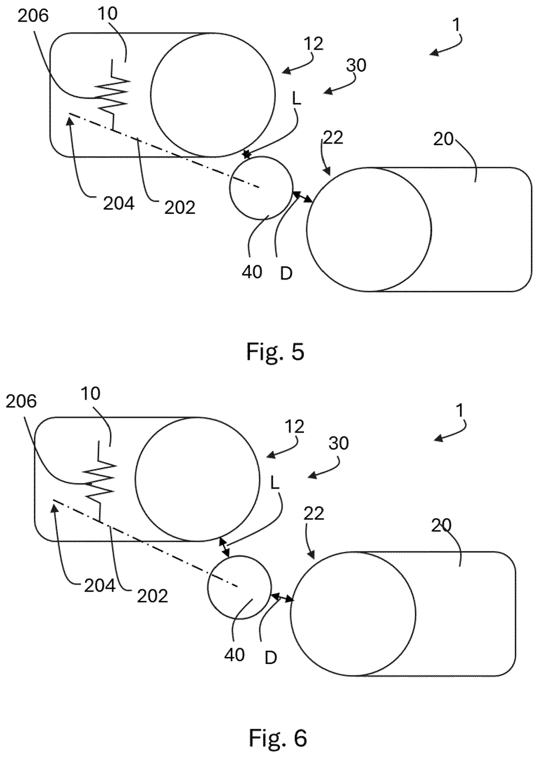

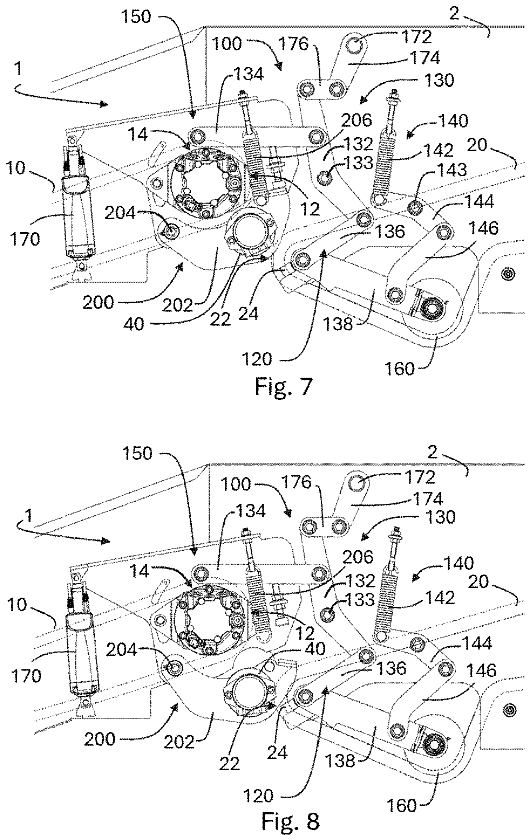

As further shown in the schematic embodiment of Figure 5 and Figure 6, the cleaning system 1 comprises similar elements as described above with respect to Figure 1 and Figure 2. These elements are designated with similar reference numbers and comprise similar structural and functional features. As can be seen further, the haulm roller 40 is also arranged here in a movable way. Here, however, the haulm roller 40 is movable under the influence of the quantity of material that is removed between the haulm roller 40 and the first transport device 10. This means that, for example, when the material between the haulm roller 40 and the first transport device 10 generates a certain force or pressure on the haulm roller 40 that exceeds a certain value, the haulm roller 40 is moved by this force or pressure in such a way that the distance L between the haulm roller and the first transport device 10 increases. According to the exemplary embodiment shown, this is realized, for example, by mounting the haulm roller 40 so that it can be tilted relative to the first transport device 10, wherein an appropriate actuator such as a spring, etc., allows the haulm roller 40 to move away from the first transport device 10 when a certain force or pressure on the haulm roller 40 is exceeded, or in other words wherein the distance L between the first transport device 10 and the haulm roller 40 increases. As further explained with reference to the embodiment shown in Figures 7 and 8, this movement of the haulm roller 40 may be an additional movement on top of the movement of the haulm roller 40 according to the movement range 42 between the two extreme positions of the haulm roller 40 as described above for changing the distance of the haulm roller 40 relative to the flow of the agricultural goods. It will be clear that such an additional movement of the haulm roller 40 increases the distance L between the haulm roller 40 and the first transport device 10 when a larger quantity of material is discharged between the first transport device and the second transport device. The additional movement further comprises, as schematically shown when moving the haulm roller 40 from the state in Figure 5 to the state in Figure 6 in which more material is discharged between the haulm roller and the first transport device 10 than in Figure 5, a movement component which increases the distance D between the upstream end 22 of the second transport device 20 and the haulm roller 40. However, it will be clear that alternative embodiments are possible, wherein the additional movement includes a movement component that reduces the distance D between the upstream end 22 of the second transport device 20 and the haulm roller 40 by no more than 10%, no more than 5%, maintains, and/or increases this distance when a larger quantity of material is discharged between the haulm roller 40 and the first transport 10, or in other words, when the additional movement increases the distance L between the haulm roller 40 and the first transport device 10. It will be clear that this helps to further limit the drop height, as any deviation of the haulm roller, for example for the passage of a clod or a large quantity of haulm, does not or hardly affect to the second transport device, so that less distance needs to be provided between the haulm roller and the second transport device to avoid interference.

Figure 7 and Figure 8 show an embodiment similar to Figure 3 and Figure 4, in a state similar to Figure 5 and Figure 6. It is clear from this that the embodiment includes an additional movement mechanism 200 for the additional movement of the haulm roller described above, for example when a larger quantity of material is discharged between the haulm roller 40 and the first transport device 10. As can be seen, the additional movement mechanism 200 includes a tilting mechanism 202 which is mounted on the first frame 150. As can be seen, the tilting point 204 of the tilting mechanism 202 is located on the side of the haulm roller 40 facing away from the second transport device 20. As can be seen further, a spring 206 is provided in the form of a mechanical tension spring 206, one end of which is connected to the tilting mechanism 202 and the other end to the first frame 150 in order to preload the haulm roller 40 with a certain force in the direction of the first transport device 10. When this force is overcome by the quantity of material between the first transport device, the haulm roller 40 will move, for example, from the state in Figure 7 to the state in Figure 8, wherein the balance of forces is restored. It will be clear that when the quantity of material being discharged decreases again, the haulm roller 40 can move back under the influence of the force of the spring, for example from the state in Figure 8 to the state in Figure 7. It will be clear that alternative embodiments for the spring 206 are possible, such as for example any other appropriate mechanical spring, such as a compression spring, coil spring, etc. or any other appropriate spring system, such as for example a pneumatic spring, etc.

However, it will be clear that alternative embodiments of such an additional movement mechanism 200 are possible, wherein an additional movement of the haulm roller 40 which increases the distance L between the haulm roller 40 and the first transport device 10, causes an additional movement of the haulm roller 40 that includes a movement component that allows the distance D between the upstream end 22 of the second transport device 20 and the haulm roller 40 to be reduced by not more than 10%; by not more than 5%; to be maintained; and/or to be increased. For example, the additional movement can allow a clod or a large quantity of haulm or other material to be discharged between the haulm roller 40 and the first transport direction 10 without the risk of blockages or an excessive inhibitory effect on the flow of agricultural goods.

According to the embodiment shown in Figure 3 and Figure 4, as well as Figure 7 and Figure 8, the cleaning system 1 is a part of an agricultural machine, such as a potato harvester. However, it will be clear that alternative embodiments are possible wherein the cleaning system is part of any appropriate installation or machine, such as, for example, an agricultural machine, an agricultural vehicle, a processing device or transport device for harvested agricultural goods, etc.

Although only one cleaning system 1 is shown in the embodiments shown, it will be clear that according to preferred embodiments, a cleaning system or an agricultural machine can be provided which comprises two or more such movable haulm rollers which are respectively arranged near a drop stage between two successive transport devices.

It will also be clear that in a further aspect, a method for using the above-mentioned cleaning system 1 for cleaning a flow of harvested agricultural products has been described. This method comprises the steps of displacing the movable haulm roller 40 at a downstream end 12 of the first transport device 10 and moving the upstream end 22 of the second transport device 20 in a movable way upon a displacement of the haulm roller 40 so that a change in the distance D between the haulm roller 40 and the upstream end 22 of the second transport device 20 is limited. As described above, the haulm roller 40 is preferably moved over a movement range 42 between a state in which the haulm roller 40 is closest to the flow of harvested agricultural products and a state in which the haulm roller 40 is furthest from the flow of harvested agricultural products. In doing so, it is preferably ensured that the distance 44 between the upstream end 22 of the second transport device 20 and the downstream end 12 of the first transport device 10 is, over at least a portion of the movement range 42 of the haulm roller 40, less than or equal to: 150% of the diameter of the haulm roller 40; 120% of the diameter of the haulm roller 40; 100% of the diameter of the haulm roller 40; 90% of the diameter of the haulm roller 40; or 80% of the diameter of the haulm roller 40.

As described with respect to Figure 7 and Figure 8, according to such an embodiment, a method is provided which additionally moves the haulm roller 40 under the influence of the quantity of material being discharged between the haulm roller 40 and the first transport device 10, so that when this additional movement of the haulm roller 40 increases the distance L between the haulm roller 40 and the first transport device 10, the additional movement includes a movement component which reduces the distance D between the upstream end 22 of the second transport device 20 and the haulm roller 40 by not more than 10%; not more than 5%; maintains it; and/or increases it.

It will be clear that many further combinations of embodiments and/or variant embodiments are possible without departing from the scope of protection as defined by the claims.

## Claims

1. A cleaning system (1) for cleaning a flow of harvested agricultural products containing:
- a first transport device (10);
- a second transport device (20);
- a drop stage (30) between the first transport device (10) and the second transport device (20);
- a haulm roller (40) configured for working together with the first transport device (10) for removing haulm from the flow of harvested agricultural products, wherein the haulm roller ( 40) is movably arranged at a downstream end (12) of the first transport device (10),
**CHARACTERIZED IN THAT**
an upstream end (22) of the second transport device (20) is arranged in a movable way and is configured in such a way that, when moving the haulm roller (40), a change of the distance (D) between the haulm roller (40) and the upstream end (22) of the second transport device (20) is limited.

2. A cleaning system according to claim 1, wherein:
- the haulm roller (40) is movable over a movement range (42) between a state in which the haulm roller (40) is closest to the flow of harvested agricultural products and a state in which the haulm roller (40) is furthest away from the flow of harvested agricultural products; and
- a distance (44) between the upstream end (22) of the second transport device (20) and the downstream end (12) of the first transport device (10) over at least a portion of the movement range (42) of the haulm roller (40) is less than or equal to
- 150% of the diameter of the haulm roller (40);
- 120% of the diameter of the haulm roller (40);
- 100% of the diameter of the haulm roller (40);
- 90% of the diameter of the haulm roller (40); or
- 80% of the diameter of the haulm roller (40).

3. A cleaning system according to claim 1 or 2, wherein the cleaning system (1) further comprises a movement mechanism (100) configured to also cause a displacement of the upstream end (22) of the second transport (20) when moving the leaf roller (40).

4. A cleaning system according to claim 3, wherein the movement mechanism (100) comprises:
- a movable first frame (150) to which the haulm roller (40) is attached and configured for moving the haulm roller (40) relative to the downstream end (12) of the first transport device (10);
- a movable second frame (120) to which the upstream end (22) of the second transport device (20) is attached and configured for moving the upstream end (22) of the second transport device (20); and
wherein the movement mechanism (100) is configured such that a displacement of the first frame (150) causes a displacement of the second frame at least over a portion of its movement range (120).

5. A cleaning system according to claim 4, wherein the movement mechanism (100) comprises one or more of the following elements:
- a linkage system (130) coupled between the movable first frame (150) and the movable second frame (120) and configured to also cause a displacement of the haulm roller (40) when moving the upstream end (22) of the second transport device (20) and/or vice versa; and/or
- a first actuator coupled to the first frame (150), a second actuator coupled to the second frame (120), and a controller configured to control the first actuator and the second actuator such that a displacement of the first frame (150) at least over a portion of its movement range is accompanied by a displacement of the second frame (120).

6. A cleaning system according to any one or more of the preceding claims, wherein the haulm roller (40) is additionally movable under the influence of the quantity of material being discharged between the haulm roller (40) and the first transport device (10), wherein this additional movement of the haulm roller (40) is configured such that an additional movement that increases the distance (L) between the haulm roller (40) and the first transport device (10) includes a movement component that allows the distance (D) between the upstream end (22) of the second transport device (20) and the haulm roller (40):
- to be reduced by not more than 10%;
- to be reduced by not more than 5%;
- to be maintained; and/or
- to be increased.

7. A cleaning system according to any one or more of the preceding claims, wherein the cleaning system (1) further comprises an additional movement mechanism (200) configured, when an additional movement of the haulm roller (40) increases the distance (L) between the haulm roller (40) and the first transport device (10), to cause an additional movement of the haulm roller (40) which includes a movement component which allows the distance (D) between the upstream end (22) of the second transport device (20) and the haulm roller (40):
- to be reduced by not more than 10%;
- to be reduced by not more than 5%;
- to be maintained; and/or
- to be increased.

8. A cleaning system according to claim 7 when dependent on claim 4, wherein the additional movement mechanism (200) comprises a tilting mechanism (202) mounted on the first frame (150), wherein the tilting point (204) of the tilting mechanism (202) is located on the side of the haulm roller (40) facing away from the second transport device (20).

9. A cleaning system according to any one or more of the preceding claims, wherein the first transport device (10) and/or the second transport device (20) comprise and/or consist of:
- a sieving web;
- a transport belt;
- a roller transport;
- a pintle belt.

10. An agricultural machine comprising a cleaning system (1) according to any one or more of the preceding claims, the agricultural machine comprising at least one said cleaning system (1).

11. An agricultural machine according to claim 10, wherein the agricultural machine comprises or consists of:
- an agricultural vehicle;
- a potato harvester; and/or
- a processing device or transport device for harvested agricultural products.

12. A method for using a cleaning system (1) for cleaning a flow of harvested agricultural products according to any one or more of the preceding claims, the method comprising the steps of:
- displacing the movable haulm roller (40) at a downstream end (12) of the first transport device (10); and
- moving the upstream end (22) of the second transport device (20) in such a way that, when moving the haulm roller (40), a change of the distance (D) between the haulm roller (40) and the upstream end (22) of the second transport device (20) is limited.

13. A method according to claim 12, wherein the method further includes the following steps:
- displacing the haulm roller (40) over a movement range (42) between a state in which the haulm roller (40) is closest to the flow of harvested agricultural products and a state in which the haulm roller (40) is furthest away from the flow of harvested agricultural products; and
- a distance (44) between the upstream end (22) of the second transport device (20) and the downstream end (12) of the first transport device (10) over at least a portion of the movement range (42) of the haulm roller (40) is less than or equal to
- 150% of the diameter of the haulm roller (40);
- 120% of the diameter of the haulm roller (40);
- 100% of the diameter of the haulm roller (40);
- 90% of the diameter of the haulm roller (40); or
- 80% of the diameter of the haulm roller (40).

14. A method according to claim 12 or 13, wherein the method further comprises the following steps:
- additionally moving the haulm roller (40) under the influence of the quantity of material being discharged between the haulm roller (40) and the first transport device (10), in such way that when this additional movement of the haulm roller (40) increases the distance (L) between the haulm roller (40) and the first transport device (10), the additional movement includes a movement component that allows the distance (D) between the upstream end (22) of the second transport device (20) and the haulm roller (40):
- to be reduced by not more than 10%;
- to be reduced by not more than 5%;
- to be maintained; and/or
- to be increased.
